Europäisches Patentamt

European Patent Office

Office européen des brevets

(11) Publication number: **0 101 275**
A1

# EUROPEAN PATENT APPLICATION

(21) Application number: 83304556.0

(22) Date of filing: 05.08.83

(51) Int. Cl.³: **F 16 K 5/06**

(30) Priority: 09.08.82 US 406304

(43) Date of publication of application:
22.02.84 Bulletin 84/8

(84) Designated Contracting States:
DE FR GB IT NL

(71) Applicant: GROVE VALVE AND REGULATOR
COMPANY
6529 Hollis Street
Oakland California 94608(US)

(72) Inventor: Ripert, Roger L.
3748 Barrington Drive
Concord California(US)

(74) Representative: Williams, Trevor John et al,
J.A. KEMP & CO. 14 South Square Gray's Inn
London WC1R 5EU(GB)

(54) Fluid flow control valve and sealing gasket therefor.

(57) A slurry valve includes a seat ring (40) slidable in the
body and carrying a seal ring (42) on its forward face to seal
against the surface of a valve ball or plug. Occupying the full
space between the back (74) of the seat ring and an annular,
radial surface (76) on the body, is an elastomeric gasket (46)
which is generally rectangular in configuration but has
corrugations across both annular faces. The gasket prevents
entry of the slurry and, in addition, the total force of the line
pressure is asserted against the inner cylindrical surface of
the gasket and transmitted through the elastomeric material
to be asserted against the opposing annular surfaces, though
concentrated on the narrow sealing bands provided by the
corrugated ridges. The invention also relates to the construc-
tion of the elastomeric gasket itself.

Fig. 2

EP 0 101 275 A1

0101275

FLUID FLOW CONTROL VALVE AND SEALING GASKET THEREFOR

## BACKGROUND OF THE INVENTION

In many, many valves, which are installed for the control of fluids in pipelines or the like, a rigid seat ring is slidably carried on the valve body or on the valve closure member with means being provided to urge the seat ring outward into sealing engagement with the other member. Commonly, resilient seal rings are provided to seal against the valve closure member and additional seal rings, such as O-rings are provided to seal around the seat rings to prevent leakage therearound. Such seat ring assemblies are entirely satisfactory for most gases or liquids, but severe problems are encountered where a liquid slurry, such as coal or other finely divided solids in suspension, is employed as the liquid medium. In such installations, the solids tend to become deposited on the metal surfaces of the valve and impede the operation of relatively slidable components, such as the seat rings themselves. In such event, the seat rings can be bound or locked against movement, preventing proper sealing operation.

## OBJECTS OF THE INVENTION

It is an object of this invention to provide a sealing system for a slurry valve which is effective to prevent the deposit of solid particles on and around the seat ring.

It is a further object of this invention to provide a seat ring system for a slurry valve which provides an effective seal and blocks entry of suspended solid particles.

It is a further object of this invention to provide a seal ring between two annular surfaces in a pressure member which utilizes system pressure to enhance the seal.

Other objects and advantages of this invention will become apparent from the description to follow, particularly when read in conjunction with the accompanying drawings.

### SUMMARY OF THE INVENTION

In carrying out this invention, there is provided a valve structure including a body and a suitable valve closure member such as a plug which is moved between closed and open position blocking and unblocking flow passages in the valve body. A seat ring is slidable in a counterbore or recess formed around a flow passage and carries a main seal at its leading face to engage against the valve closure member. A rubber gasket is received to occupy fully the space between the trailing end of the seat ring and the annular shoulder at the end of the recess, to block entry of the slurry between such surfaces and to seal between them as well. The annular faces of the gasket are corrugated to provide a series of arcuate convex ridges across them which seal over narrow annular areas across the face of the gasket. The gasket is installed under slight axial compression to effect an initial seal and to provide a modest spring force biasing the seat ring toward the valve closure member for an initial seal. In service, line pressure asserted against the inner cylindrical surface of the gasket is transmitted up and outward through the resilient material to provide intensified pressure sealing over the narrow annular sealing contacts of the gasket against both the back of the seat-ring and the bottom of the recess. A soft second gasket is provided to close off the space between the front of the seat ring and the valve body to prevent entry of the slurry from around the outside of the seat ring.

### BRIEF DESCRIPTION OF THE DRAWINGS

In the drawings:

FIG. 1 is a vertical section view through a ball valve (one-half) embodying features of this invention;

FIG. 2 is an enlarged partial section of a sealing assembly of this invention;

FIG. 3 is an enlarged section view of the sealing gasket;

FIG. 4 is an enlarged partial section of another embodiment of this invention; and

FIG. 5 is an enlarged section view of another sealing gasket embodiment.

## DESCRIPTION OF PREFERRED EMBODIMENTS

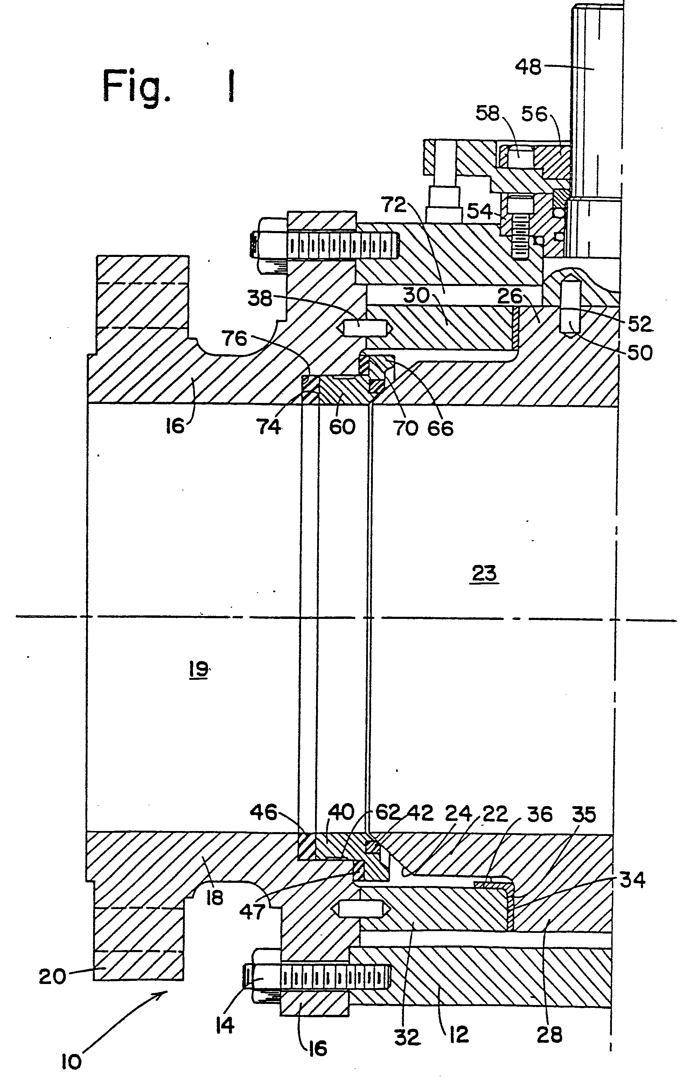

### The Embodiment of FIGS. 1 to 3

Referring now to FIG. 1 with greater particularity, a ball valve 10 may include a body band 12 of annular configuration, which may be formed from pipe or from plate material which is rolled into a split ring and its ends welded together. Bolted at 14 to the annular ends of the body band 12 are end closures 16 which may include integral hubs 18 with flow passages 19 therethrough, as well as flanges 20 for connection into a pipeline (not shown).

A valve ball 22 with a flow passageway 23, and having a spherical outer surface 24 and cylindrical, integral trunnions 26 and 28, is contained within the body band 12. Rotatably carried on the trunnions 26 and 28 are bearing blocks or retainers 30 and 32 having central bores 34 to accommodate rotary bushings 35, and the lower bearing retainer 32 may carry thrust bearing 36 to accommodate the weight of the ball 22. In assembly, the bearing retainers 30 and 32 are located with respect to the end closures 16 by means of positioning pins 38 and then clamped between the end closure 16 by tightening the bolts 14.

Seat rings 40 which are slidable in a body end closure 16 are urged against opposite sides of the ball 22 so that main seals 42, such as plastic inserts, can effect seals with a surface of the ball 22. Tail gaskets 46, comprising a particular feature of this invention, seal between the trailing end of the seat ring 40, and an outer gasket 47 seals around the outside of the seat ring 40.

The ball 22 is rotated by means of a stem 48, between the open positon shown, with flow passage 23 aligned with the flow passages 19 of the hubs 18, and a closed position, with the flow passage 23 disposed normal thereto. Rotation of stem 48 is transmitted to the ball 22 by means of a pair of pins 50 which are receivable in holes 52 in the upper trunnion 26. The stem is sealed by means of a gland plate 54 and keyed to it is an indicator plate 56 which engages a stop member 58 to indicate position of the valve ball 22.

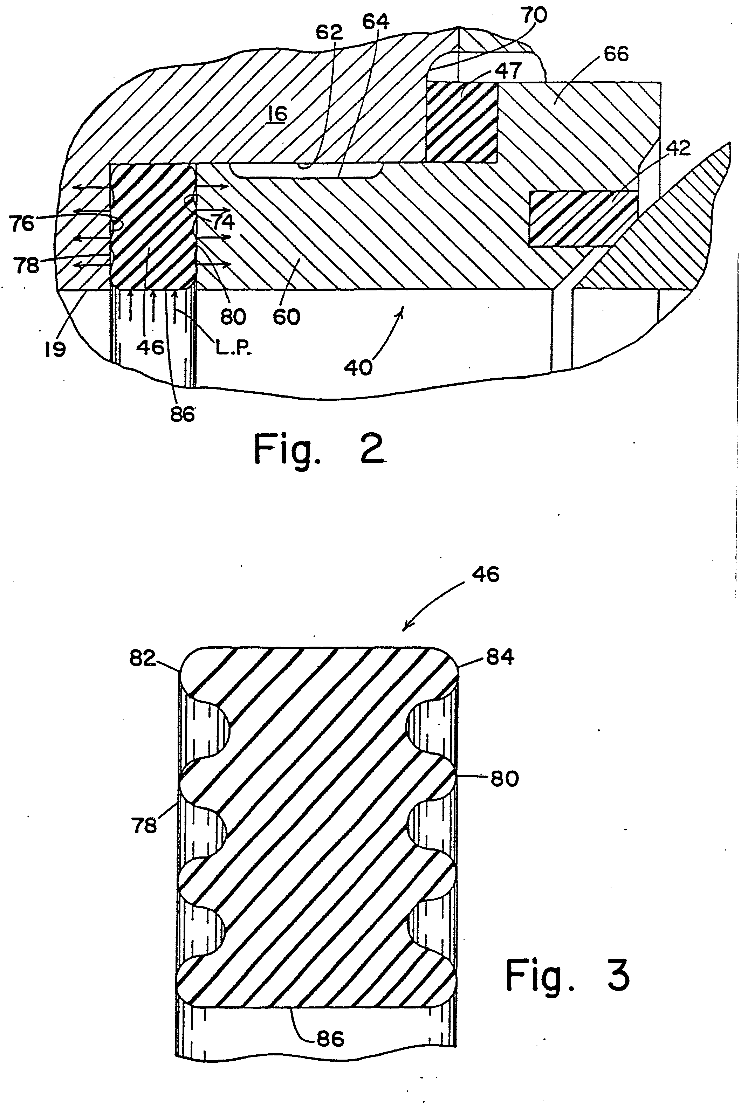

Referring now to FIG. 2 the seat ring 40 with its plastic seat insert main seal 42 has a cylindrical tail portion 60, which is slidably received in a cylindrical recess or counterbore 62 formed in the end closure 16 around the flow passage 19. A shallow groove 64 may be formed around the trailing portion 60 of the seat ring for introduction of a lubricant to facilitate sliding action of the tail portion 60 in the counterbore 62.

To compensate for the removal of metal to accommodate the plastic seat insert 42, the leading portion 66 of the seat ring 40 is made of larger diameter, as shown. A soft, rectangular gasket 47 is provided to occupy the space between this leading flange 66 and the valve end closure 16 to prevent entry of fluids, particularly where a slurry is the fluid medium, between the relatively movable seat ring 40 and the end closure 16. Preferably, an annular groove 70 is cut into the interior face of the end closure 16 to accommodate the soft gasket 47. Thus, the soft gasket 47 acts as a seal to prevent a leakage path from the space 72 within the valve body around the seat ring 40, and, in addition, it acts as a blocking device to prevent the slurry from entering the clearances between the seat ring 40 and the end closure 16.

Disposed in the space between the annular trailing surface 74 of the seat ring 40 and the annular radial bottom 76 of the recess 62 is the rubber gasket 46 of this invention. The gasket 46 is of generally rectangular configuration to occupy fully the space between the surfaces except, however, that the opposite annular surfaces 78 and 80 are corrugated to provide a plurality of annular ridges 82 and 84 across the generally radial sides of the seal gasket 46. The seal gasket 46 is installed under slight compression to provide an initial seal as well as a small spring force, which braces the seat ring 40 toward the valve ball 22.

When line pressure is asserted against the inner cylindrical surface 86 of the gasket 46 seal as indicated by the arrows L.P., the total force (pressure x area) is transmitted through the resilient material of the gasket to be asserted against the two annular sealing surfaces 74 and 76. Because of the spaced convex annular ridges 82 and 84, this total force is asserted against relatively narrow annular sealing surfaces so that the unit sealing pressure is greater than the line pressure of the fluid, approximately in the ratio of the area of the inner cylindrical surface 86 to the total area of the narrow sealing bands between the gasket 46 and the surfaces 74 and 76 against which the narrow ridges 82 and 84 are directed, to provide a very effective seal against the back of the seat ring 40.

The cylindrical recess 62 and, hence, the trailing surface 74 of the seat ring 40 are of a larger diameter than the effective sealing diameter of the plastic insert. Therefore, when the line pressure asserted against the inner cylindrical surface of the gasket is transmitted through the material of the gasket, and asserted against the greater area annular surface of the seat ring 60, it is opposed by the same line pressure acting over the area only out as far as the effective sealing diameter, resulting in a net sealing force, or axial piston force, that biases the seat ring 40 against the cylindrical surface 24 of the valve ball 22.

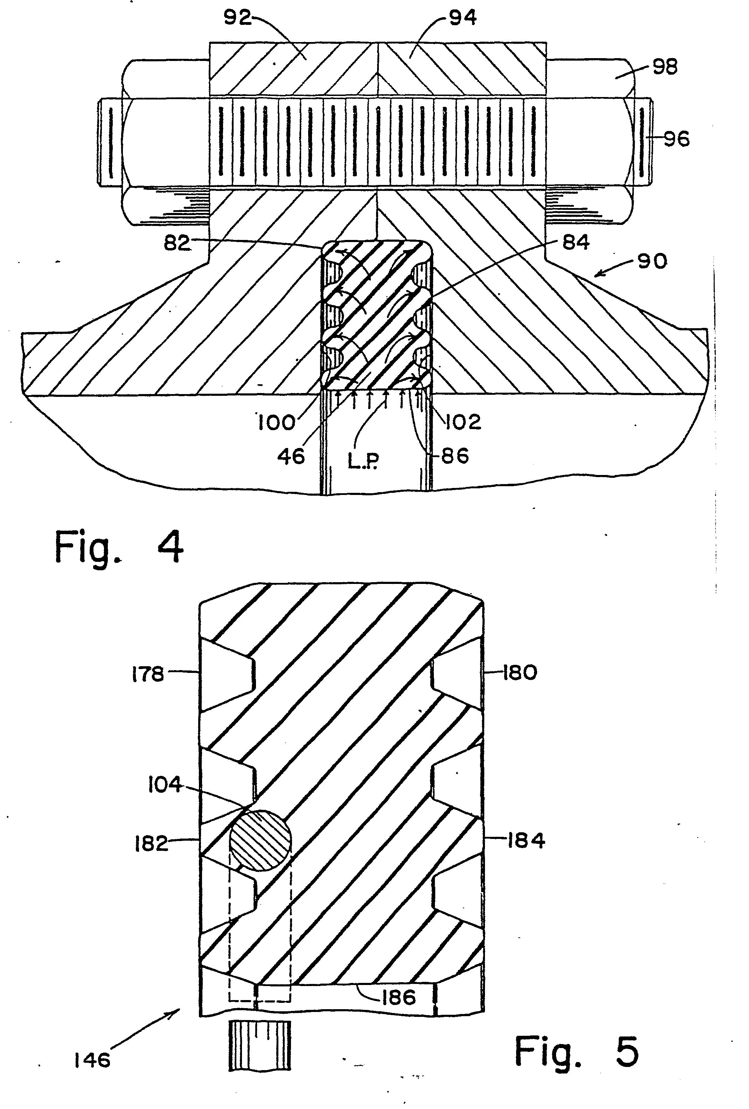

### The Embodiment of FIG. 4

As here shown, the resilient gasket 78 may be employed in a pressure vessel 90 to seal between opposing flanges 92 and 94 which are secured together as by means of a stud 96 and nuts 98.

Again, the line pressure L.P. is asserted against the cylindrical inner surface 88 of the seal ring and is transmitted through the soft material of the gasket 46 to be applied against the radial surfaces 100 and 102 of the flanges 92 and 94 so that, as in the Embodiment of FIGS. 1 to 3, the unit sealing pressure is greater than the line pressure by a factor by the ratio of the total area of the inner cylindrical surface of the gasket 88 to the sum of the narrow contact areas of the sealing ridges.

## The Embodiment of FIG. 5

The term "corrugated" as used in this invention is not to be restricted to include only arcuate or semi-circular ridges and grooves, but may include other configurations. For example, as shown in FIG. 5, the gasket 146 may have ridges 182 and 184 of truncated Vee configurations forming the opposing sealing surfaces. Again, pressure asserted against the inner cylindrical surface 186 will be transmitted through the resilient material of the gasket 146 to apply a sealing force, which is concentrated at the relatively flat ridges 182 and 184.

Also in this embodiment, as well as in that of FIG. 3, the seal ring may be reinforced with a rigid, e.g. metallic, ring 104 to make the gasket 146 (or 46) stiffer radially. This will ensure that with relatively soft rubber, the gasket is easily and correctly installed, particularly in large valves and pipelines. It also prevents the gasket from being drawn into the line by the flowing fluid.

While this invention has been described in conjunction with preferred embodiments thereof, it is obvious that modifications and changes therein may be made by those skilled in the art to which it pertains without departing from the spirit and scope of this invention, as defined by the claims appended hereto.

## CLAIMS

1. A fluid flow control valve comprising: a valve body (12,16) having flow passageways (19) from the exterior to the interior thereof; a valve closure member (22) movable in said valve body between closed and open positions; an annular recess (62) in one of said valve body and closure members around one of the flow passageways defined by an enlarged, concentric cylindrical surface (62) and a radial surface (76) thereon; and a seat ring (40) slidably received in said cylindrical surface with a seal ring (42) having a sealing diameter smaller than said cylindrical surface being carried on the leading face of said seat ring for sealing against said valve closure member; characterized in that an elastomeric annular gasket (46) is disposed between said radial surface (76) and the trailing face (74) of said seat ring (40) and is of generally rectangular cross-section but having annular ridges (82,84) on both of its annular faces at the inner and outer diameters thereof.

2. A valve as claimed in claim 1, characterized in that said annular faces of the gasket are corrugated to form a series of annular ridges thereacross.

3. A valve as claimed in claim 1 or 2, characterized in that said ridges (82,84) are of arcuate convex configuration.

4. A valve as claimed in claim 1, 2 or 3, characterized in that the inner diameter of said annular gasket (46) and said seat ring (40) are substantially equal to prevent entry therebetween of fluid from said one passageway.

5. A valve as claimed in any preceding claim, characterized in that a radial flange (66) is provided on said seat ring (40) at the leading end thereof and a soft rubber gasket (47) is disposed between the trailing face of said radial flange (66) and said valve body (at 70) around said annular recess to prevent entry of fluid.

6. A gasket for sealing between two annular surfaces (74, 76; 100, 102) comprising an elastomer ring (46) of generally rectangular cross-section to occupy the space between said annular surfaces characterized in that said elastomer ring has annular ridges (82,84) on both annular faces at the inner and outer diameters thereof.

7. A gasket as claimed in claim 1, characterized in that said annular faces are corrugated to form a series of annular ridges thereacross.

8. A gasket as claimed in claim 6 or 7, characterized in that said ridges are of arcuate, convex configuration.

9. A gasket as claimed in claim 1 or 2, characterized in that said ridges (182, 184) are of truncated Vee configuration.

10. A gasket as claimed in any preceding claim, characterized in that a rigid ring (104) is encased in said elastomer ring (186).

Fig. 1

1/3

0101275

Fig. 2

Fig. 3

Fig. 4

Fig. 5

**European Patent Office**

**EUROPEAN SEARCH REPORT**

| | DOCUMENTS CONSIDERED TO BE RELEVANT | | EP 83304556.0 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | <u>DE - B - 1 235 085</u> (LAYTON MARK & COMP.) <br> * Fig. 2-6 * <br> -- | 1,2 | F 16 K 5/06 |
| A | <u>US - A - 3 398 926</u> (D. SCARAMUCCI) <br> * Totality * <br> -- | 1,2 | |
| A | <u>US - A - 4 269 391</u> (T. SAITO) <br> * Fig. 2E, 3E * <br> -- | 1,2 | |
| A | <u>US - A - 3 357 679</u> (R.A. GULICK) <br> * Totality * <br> -- | 1 | |
| A | <u>DE - C - 883 374</u> (NEUE ARGUS G.M.B.H.) <br> * Fig. 1,3 * <br> -- | 1,4 | TECHNICAL FIELDS SEARCHED (Int. Cl ³) |
| A | <u>CH - A - 473 339</u> (MINNESOTA RUBBER COMP.) <br> * Fig. 1,2 * <br> -- | 1,2,3, 6,7,8 | F 16 K 5/00 <br> F 16 K 11/00 |
| A | <u>FR - A - 1 118 630</u> (M. BERTRAND-EMMANUEL-VICTOR WEIL) <br> * Totality * <br> -- | 1,2,3, 6-9 | |
| A | <u>DD - A - 86 728</u> (HEINRICH, WOLF-GANG) <br> * Fig. 2 * <br> -- | 1,2,3, 6-8 | |

The present search report has been drawn up for all claims

| Place of search | Date of completion of the search | Examiner |
|---|---|---|
| VIENNA | 09-11-1983 | ROUSSARIAN |

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | <u>DE - B - 1 907 415</u> (BRITISH ROPES LTD.)<br><br>* Fig. 2 * | 1,10 | |
| | ----- | | |
| | | | TECHNICAL FIELDS SEARCHED (Int. Cl. ³) |

EPO Form 1503.2  06.78